# EUROPEAN PATENT APPLICATION

(11) **EP 3 165 732 A1**
(43) Date of publication of application: **10.05.2017**
(21) Application number: 15193707.5
(22) Date of filing: 09.11.2015
(51) Int. Cl.: F01N 3/20

(54) **A METHOD FOR ACTIVATING/DEACTIVATING A BIOLOGICAL CATALYST USED IN A CONVERSION SYSTEM ON BOARD A VEHICLE**

(71) Applicant: Plastic Omnium Advanced Innovation and Research, 1120 Bruxelles (BE)
(72) Inventor: MONGE-BONINI, Beatriz, B-1040 BRUSSELS (BE); VAN SCHAFTINGEN, Jules-Joseph, B-1300 WAVRE (BE); DE MAN, Pierre, B-1090 BRUSSELS (BE); DOUGNIER, François, B-3190 BOORTMEERBEEK (BE)
(74) Representative: Remy, Vincent Noel Paul

(57) **Abstract**

It is proposed a method for activating/deactivating a biological catalyst used in a conversion system on board a vehicle, the vehicle comprising a source of energy adapted to activate the biological catalyst for converting a compound into reaction product. The method comprises:
- detecting (S1) an event indicative of the filling/refilling of the conversion system with biological catalyst;
- determining (S2) an amount of energy available at the source of energy;
- starting at least one conversion operation comprising the steps of:
(i) verifying (S3) whether the amount of energy available is greater than or equal to an amount of energy needed for activating the biological catalyst so as to achieve a predetermined level of conversion of said compound;
(ii) if said verifying (i) is positive, activating (S4) the biological catalyst.

- terminating (S7) said at least one conversion operation.

## Description

### TECHNICAL FIELD

The invention relates to a conversion system for a vehicle. In particular it relates to a conversion system that uses a biological catalyst to convert a compound into reaction product. For example, it relates to a conversion system that uses an enzyme to convert an ammonia precursor into ammonia solution or effluents (i.e. reaction product). More precisely, the invention relates to a method for activating and deactivating such enzyme on board a vehicle.

### BACKGROUND OF THE INVENTION

Vehicle systems using enzymes for converting an ammonia precursor, for instance urea, are disclosed in patent applications WO 2015032811 and WO 2014095894, in the name of the Applicant, the content of which is included herein by reference.

Generally, enzymes degrade over time, thereby losing their beneficial biological activity. It is known to use temperature conditioning systems to preserve enzymes during long storage period on board the vehicle. However, such temperature conditioning systems are generally complex.

The object of embodiments of the invention is to provide a method which eliminates the need for complex temperature conditioning systems.

Another object of embodiments of the invention is to provide a method which does not impact the functioning of vital systems of the vehicle.

### SUMMARY

According to a first aspect of the invention there is provided a method for activating/deactivating a biological catalyst used in a conversion system on board a vehicle, the vehicle comprising a source of energy adapted to activate the biological catalyst for converting a compound into reaction product, the conversion system being configured to supply reaction product to a consuming unit on board the vehicle, wherein the method comprises:
- detecting an event indicative of the filling/refilling of the conversion system with biological catalyst;
- determining an amount of energy available at the source of energy;
- starting at least one conversion operation comprising the steps of:
   (i) verifying whether the amount of energy available is greater than or equal to an amount of energy needed for activating the biological catalyst so as to achieve a predetermined level of conversion of said compound;
   (ii) if said verifying (i) is positive, activating the biological catalyst.
- terminating said at least one conversion operation.

Thus, it is proposed a biological catalyst control strategy based on the analysis of energy on board the vehicle. More precisely, the method of the present invention consists in activating and deactivating the biological catalyst upon the result of an energy comparison. According to an advantageous aspect of the present invention, the activation of the biological catalyst is conditioned to the detection of a sufficient amount of energy available from the energy source to operate a biological conversion. The idea behind the present invention is to activate the biological catalyst rapidly (i.e. as soon as possible) and intensely after its introduction (i.e. filling/refilling) in the conversion system, so as to benefit from its high biological activity. Therefore, good quality and high quantity of reaction product can be produced quickly.

In the present document, the term "activate the biological catalyst" means supply energy to the biological catalyst for promoting a chemical reaction in the presence of the compound, and the term "deactivate the biological catalyst" means stop supplying said energy to the biological catalyst.

In a particular embodiment, the compound is an ammonia precursor, such as for instance urea. The ammonia precursor is suitably present as a composition, such as an aqueous composition, more particularly a concentrated aqueous composition. Suitably, the composition is a concentrated urea solution of at least 10% urea. In this embodiment, the reaction product may be for instance ammonia or hydrogen suitable for use in either selective catalytic reduction (SCR) methods for purifying exhaust gases or for fuelling fuel cells. Suitable biological catalysts are herein urease.

In an alternative embodiment, the compound can be obtained by dissolving ammonia precursor granules having a coating in an ammonia precursor liquid, for example the commercially available liquid ammonia precursor, known as AdBlue®.

In an alternative embodiment, the compound is a hydrogen precursor, such as ammonia or polysaccharide. Good results are known for the enzymatic conversion of a polysaccharide such as sucrose into hydrogen, for instance with enzymes such as invertase, glucose dehydrogenase (GDH), hydrogenase, and glucose isomerase (GI). This may be highly useful to provide hydrogen for use in fuel cells (i.e. consuming units).

According to an advantageous embodiment, the conversion system comprises a storage unit for the storage of the biological catalyst. In a particular embodiment, the storage unit can further be configured such that the catalysed conversion (i.e. decomposition of the compound) takes place inside the storage unit. In this particular embodiment, the storage unit further operates as a reactor (also called conversion unit or decomposition unit). For example, the compound can be stored in a tank mounted on board the vehicle. Thus, when decomposition is needed, a predetermined amount of compound is transferred by means of a transfer device from the tank into the reactor (where the biological catalyst(s) is retained). A transfer device can be for example a pump, valve, combination of both, gravity, gravity in combination with a valve or a valve in combination with whatever system known by the state of the art to transfer liquid. Once the decomposition is performed, the reaction product is evacuated (i.e. drained) out of the reactor and is guided towards a storage container (also called buffer). The size of the container may be chosen in dependence on the specific application and the flow rate of reaction product.

In a particular embodiment, the storage unit (for storing the biological catalyst) may be equipped or cooperate with a locking element (for instance a door or a cap) configured to prevent, in its locked state, a communication from being established between the internal volume of the storage unit and a space accessible to an operator. In such embodiment, the operator can fill/refill the conversion system with biological catalyst, i.e. introduce biological catalyst inside the storage unit, when the locking element is in its opened state (i.e. door opened or cap removed). Advantageously, the storage unit may be equipped with a sensor for detecting the opened and locked states of the locking element, thereby providing information indicative of the filling/refilling of the conversion system with biological catalyst.

The biological catalyst(s) used in the invention may be a composition either in liquid form or in solid form.

The solid form may comprise a hydrogel encapsulating the biological catalyst.

In a particular embodiment, use is made of a solid substrate onto which the biological catalyst is immobilized. One example of a suitable solid substrate is for instance synthetic polymers such as polystyrene, EVOH, nylon-6 and the like. Alternatively, use may be made of carbohydrates, such as chitosan, dextran and agarose, and porous nanoparticles, for instance of silica.

The solid form may further be a powder or a powder compressed into one or more pellets, granules or beads. Alternatively, it is in the form of capsules or pills.

In an alternative embodiment, the biological catalysts (immobilized or not) can be embedded into cartridges. Major advantages of cartridges appear that these may be provided in shape and dimensions that allow easy introduction inside the storage unit, secure retention within the storage unit and easy removal from the storage unit. Moreover, cartridges may be provided with protective means such as coatings to maintain integrity and also to avoid contamination of biological catalyst and/or its composition. In a particular embodiment, cartridges (and/or other solid forms) may further be provided with a liquid composition of biological catalyst inside. In a particular embodiment, the cartridge may be equipped with an electrical connector and the storage unit may be equipped with a complementary electrical connector. The electrical connector and the complementary electrical connector can be designed such that, when the cartridge is inserted in the storage unit, the electrical connector engages the complementary electrical connector so as to create an electrical connection. Advantageously, the step of detecting the filling/refilling of the conversion system with biological catalyst may consist in detecting the creation of such electrical connection. Alternatively, a contact switch can be used and configured such that it is closed when the cartridge is present in the storage unit and open when the cartridge is removed out of the storage unit.

In a first particular embodiment, the source of energy is a dedicated resource aiming to power the conversion system only. Suitable source of energy can be herein a fuel cell. For example, heat generated from the fuel cell can be collected and transmitted to the biological catalyst(s) for activating the latter. In this first particular embodiment, the step of determining an amount of energy available at the source of energy may consist in measuring or estimating the current temperature of the fuel cell. For example, if the measured temperature is within a predetermined temperature range, then it is detected that there is sufficient heat energy available from the fuel cell to start a conversion operation and activate the biological catalyst such that to achieve a predetermined level of conversion. In a second particular embodiment, the source of energy is a shared resource aiming to power the conversion system and other systems on board the vehicle. Suitable source of energy can be herein the vehicle battery. In this second particular embodiment, the step of determining an amount of energy available at the source of energy may consist in measuring or estimating the current amount of electrical energy stored in the vehicle battery. In a preferred embodiment, the available amount of energy is equal to the measured amount of electrical energy stored in the vehicle battery minus a predetermined amount of energy, which corresponds to an amount of electrical energy allocated (i.e. reserved) to vital systems of the vehicle. This has the advantage that the activation of the biological catalyst(s), and thus the conversion of the compound, can be performed without impacting the functioning of vital systems of the vehicle. For example, if the available amount of energy is within a predetermined range, then it is detected that there is sufficient electrical energy available from the vehicle battery to operate a start a conversion and activate the biological catalyst so as to achieve a predetermined level of conversion.

It is to note that the energy from the energy source can be transmitted directly or indirectly to the biological catalyst for its activation. For example, in case of indirect transmission of energy, specific means such as an electrical heater (using electrical current), a heat exchanger (using heat), a micro-wave heater or a metal plate using electromagnetic energy may be used.

It is to note that the step of determining an amount of energy available at the source of energy can be performed in a continuous manner (continuous measuring) or in a sequential manner (i.e. at different points in time).

It is to note that the predetermined level of conversion can be such that a full or at least a partial conversion of the compound is obtained.

It is to note that the method of the present invention is independent of the operation of the internal combustion engine, in the sense that the conversion can start and stop either when the vehicle is parked (i.e. engine off) or when the vehicle is running (i.e. engine on).

In a first advantageous embodiment, it is proposed to stop the conversion when it is detected that there is no more sufficient amount of energy available from the energy source to continue the conversion. To this aim, the step of terminating said at least one conversion operation comprises the steps of:
(iii) verifying whether the amount of energy available is lower than the amount of energy needed for activating the biological catalyst so as to achieve the predetermined level of conversion of said compound;
(iv) if said verifying (iii) is positive, deactivating the biological catalyst.

In a second advantageous embodiment, it is proposed to stop the conversion when a target quantity of reaction product is reached. To this aim, the step of terminating said at least one conversion operation comprises the steps of:
(v) determining a current quantity of reaction product available in the conversion system;
(vi) verifying whether the current quantity of reaction product available is greater than or equal to a predetermined target quantity of reaction product;
(vii) if said verifying (vi) is positive, deactivating the biological catalyst.

In a particular embodiment, the target quantity can be such that it corresponds to a given ratio of a total volume corresponding to the sum of the volume of compound and the volume of reaction product. For example for a SCR application, the required quantity of reaction product to meet NOx reduction in cold start-up or cold conditions is about 1/3rd of the total volume.

For fuel cells that require effluents for the start-up time, the required volume of effluents will correspond to the consumption during the start-up time: for instance, if the start-up time of the fuel cell is 10 minutes and the consumption of the fuel cell is 18 l/h, then the required quantity of reaction product is 3 liters.

In another particular embodiment, the biological conversion operation can terminate when a predetermined target quantity of compound is converted. For fuel cells, the target quantity of compound to be converted will correspond to the ratio of fuel used for the start-up time (for example, during the first 10 minutes) versus the total amount of fuel used. So for a user who makes typical vehicle trips of 30 minutes, the target quantity of compound to be converted will be 1/3rd (i.e. 10/30) of the total quantity of compound available.

In a third advantageous embodiment, it is proposed to stop the conversion after a certain period of time elapses. To this aim, the step of terminating said at least one conversion operation comprises the steps of:
- starting a timer for a predetermined amount of time;
- upon expiry of said timer, deactivating the biological catalyst.

Thus, the progress of the conversion is suitably controlled by a time-control device (i.e. timer). Such implementation is simple.

In a particular embodiment, one can implement a control strategy wherein successive conversion operations have the same duration. In another particular embodiment, one can implement a control strategy wherein the successive conversion operations have different durations.

In a particular embodiment, one can implement a control strategy wherein a predetermined urea solution volume is partially converted, and the target conversion ratio is reached incrementally, through several successive conversion operations.

In a fourth advantageous embodiment, the step of terminating said at least one conversion operation comprises the steps of:
- determining at least one parameter characteristic of the reaction product;
- detecting an event indicative of end-of-conversion based on said at least one parameter;
- deactivating the biological catalyst.

Thus it is proposed to measure or calculate one or several parameter(s) characteristic of the reaction product. For example, such parameter can be a physical (temperature, pressure, thermal capacity, electrical conductivity) or chemical property (ionic concentration, pH, analyte concentration). The detection of an event indicative of end-of-conversion may consist in comparing the parameter(s) characteristic of the reaction product with a predetermined threshold value(s) or with a predetermined range of values. Such value(s) can be obtained, for example, from theoretical and/or experimental analysis. Good monitoring of the progress of the conversion, and thus efficient detection of an event indicative of end-of-conversion, can be achieved by measuring and analysing the thermal capacity and/or the electrical conductivity of the reaction product. For example, the latters can be measured by means of a conductivity sensor or an ultrasonic sensor. The sensor(s) can be placed within or at the outlet of the reactor. In an alternative embodiment, a chemical sensor (pH sensor, ammonia sensor, etc.) can be used.

Advantageously, the parameter(s) characteristic of the reaction product can be used to assess the activity of the enzyme. For example, the measured electrical conductivity of the reaction product for a given amount of energy supplied to the enzyme and for a given time of conversion can be compared to a look-up table to determine the level of activity of the enzyme. This allows detecting when the enzyme has to be renewed. This can further allow detecting malfunction of the system.

As it will be described later on, the method of the present invention allows the conversion system to operate either in a continuous mode or in a batch mode.

In the continuous mode, the compound (for example urea solution) is fed continuously to, and reaction product (i.e. effluents) is continuously removed from, the reactor.

In the batch mode, the reaction product is transferred out of the reactor once the conversion is complete, for instance, when 80%, preferentially 95%, more preferentially 99% or ideally 100% of the compound is converted into reaction product.

Advantageously, the method further comprises:
- after said terminating said at least one conversion operation, conveying reaction product from the reactor towards the container;
- replenishing the reactor with biological catalyst and/or compound.

Thus, in the case of batch-wise operation of the reactor, the biological catalyst and/or the compound may be added to the reactor during operation of said reactor, or alternatively before operation of the reactor is resumed.

The batch mode is more complex to implement than the continuous mode. Indeed, it requires operating in a sequential manner the following steps of: terminating said at least one conversion operation; then conveying reaction product from the reactor towards the container (buffer); and then replenishing the reactor with biological catalyst and/or compound for a next conversion operation. On the other hand, the batch mode has the advantage to allow close monitoring of the progress of the conversion (by means of a sensor, as previously described) and insure that the reaction is complete or is at the appropriate level of conversion before letting the reaction product go to the buffer and switch to another batch. Thus, the risk of contaminating the reaction product stored in the buffer with partially converted or non-converted reaction product is reduced.

In a particular embodiment, the conversion system can operate in the continuous mode and the batch mode, in an alternate manner.

Advantageously, the method further comprises:
- measuring at least one operating parameter of the conversion system;
and wherein the amount of energy needed for activating the biological catalyst is determined as a function of the measured operating parameter(s).

In a particular embodiment, the temperature of the reactor and/or the ambient temperature can be measured. These measured temperatures can then be used to determine a correction factor to be applied to the energy demand (i.e. amount of energy needed for activating the biological catalyst). This allows precise determination of the energy demand.

According to a further aspect, the invention relates to a vehicle system comprising:
a conversion system using a biological catalyst and being configured to supply reaction product to a consuming unit;
a source of energy adapted to activate the biological catalyst for converting a compound into reaction product;
an electronic controller configured to:
   - detect an event indicative of the filling/refilling of the conversion system with biological catalyst;
   - determine an amount of energy available at the source of energy;
   - start at least one conversion operation and activate the biological catalyst, when the amount of energy available is greater than or equal to an amount of energy needed for activating the biological catalyst so as to achieve a predetermined level of conversion of said compound;
   - terminate said at least one conversion operation.

Advantageously, the electronic controller is further configured to perform the steps of the method as described above.

### BRIEF DESCRIPTION OF THE DRAWINGS

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 is a diagram illustrating an exemplary embodiment of an ammonia generating system using a biological catalyst and to which the method of the present invention may be applied;
Figure 2 illustrates an exemplary embodiment of a flow chart of instructions depicting logical operational steps for activating and deactivating the biological catalyst of figure 1 in a continuous mode; and
Figure 3 illustrates an exemplary embodiment of a flow chart of instructions depicting logical operational steps for activating and deactivating the biological catalyst of figure 1 in a batch mode.

### DETAILED DESCRIPTION

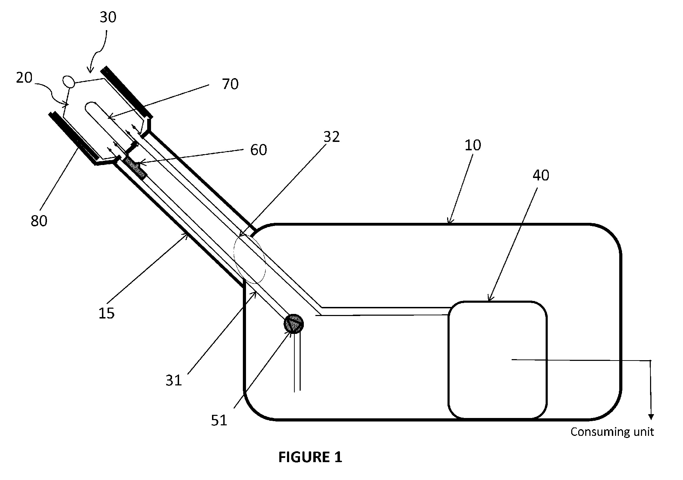

Figure 1 illustrates an exemplary embodiment of an ammonia generating system. The ammonia generating system comprises a tank 10, a retaining unit 20, and a receiving part 30 for receiving the retaining unit 20. The tank 10 is adapted for storing an ammonia precursor solution (i.e. compound), such as a urea solution.

In embodiments of the invention the tank 10 may be filled with the commercially available liquid ammonia precursor, known as AdBlue® and matching the ISO 22241 standard specifications. Such a fluid contains 32.5 ± 0.7 weight % urea.

The retaining unit 20 stores a catalyst, typically a biological catalyst, and for instance an enzyme such as urease. The receiving part 30 with the inserted retaining unit 20 constitutes a decomposition area where the conversion of the ammonia precursor into reaction product takes place. A cap (not shown) may be closing the decomposition area prior to operation.

The receiving part 30 comprises a heater 70. The heater 70 is configured for heating the enzyme and the ammonia precursor solution in the retaining unit 20, when the retaining unit 20 is arranged in the receiving part 30. In the illustrated example, the receiving part 30 is provided with thermal conditioning means 80 for heating and/or cooling the retaining unit 20. The heater 70 heats up the decomposition area at the appropriate temperature for the reaction to occur, i.e. for the decomposing of the ammonia precursor solution into ammonia solution. The heater 70 can be of any type as known in the state of the art. Typically a resistive heater is well suited. However, it is also possible to provide, as a heater, a conduit through which the cooling liquid of the engine is circulated. The thermal conditioning elements 80 may contribute to the heating during the decomposition of the ammonia precursor solution. The thermal conditioning elements 80 may also condition the catalysts, typically enzymes, e.g. by cooling the catalyst around 4°C. In that way longer conservation times can be reached, and the decomposition reaction may be interrupted or slowed down while the vehicle is stopped. These thermal conditioning elements 80 can be e.g. Peltier effect devices, isolating elements, phase change materials, or combinations of thereof.

In this exemplary embodiment the receiving part 30 is integrated in a filler pipe 15 of the tank 10. The filler pipe 15 is a pipe used for filling the tank 10. As illustrated in Figure 1, the receiving part 30 is integrated into a head of the tank filler pipe 15. To fill the tank 10, the retaining unit 20 is first removed and the ammonia precursor is refilled through a filling orifice. At the end of a filling operation, the retaining unit 20 (optionally a new one with fresh catalyst) is put in place in the receiving part 30.

A fluid transfer device 51 allows the transfer of ammonia precursor solution to the decomposition area in the retaining unit 20, via a first pipe section 31. The generated effluents containing the ammonia are collected in buffer reservoir 40, from which they are sent to an ammonia consuming device (not shown), optionally using a fluid transfer device. The generated effluents are conveyed from the retaining unit 20 towards the buffer reservoir 40, via a second pipe section 32. A fluid transfer device can be for example a pump, a valve, a combination of both, gravity, gravity in combination with a valve or a valve in combination with whatever system known in the state of the art to transfer liquid. It is noted that if fluid transfer device 51 is a pump, it can pressurize both the retaining unit 20 and the buffer reservoir 40 so that the effluents can be sent directly to the ammonia consuming device.

An electronic controller or an electronic control unit (ECU) (not shown) is configured for controlling operation of the fluid transfer device(s) and the heater 70. In the example of Figure 1, the fluid transfer device(s) and the heater 70 are powered by the vehicle battery.

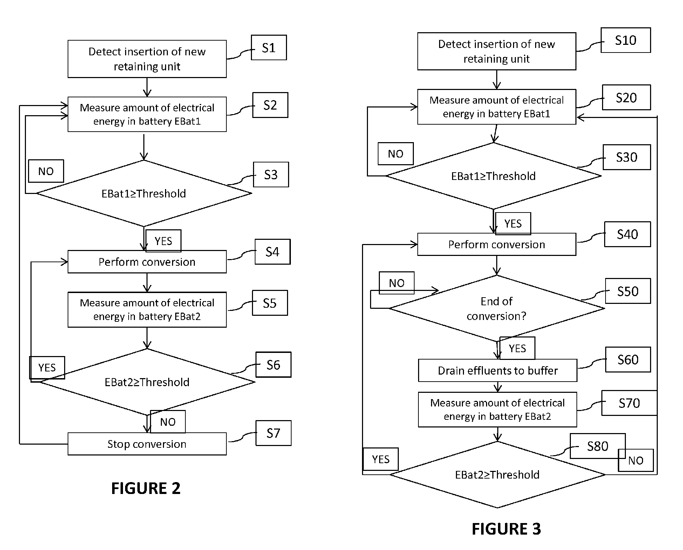

The ECU includes a series of computer-executable instructions, as described below in relation to Figures 2 and 3. These instructions may reside, for example, in a RAM of the ECU. Alternatively, the instructions may be contained on a data storage device with a computer readable medium (for example, USB key or CD-ROM).

Figure 2 illustrates an exemplary embodiment of a flow chart of instructions depicting logical operational steps for activating and deactivating the biological catalyst of figure 1 in a continuous mode.

At step S1, the ECU detects the insertion of a new retaining unit 20 with fresh catalyst in the receiving part 30.

At step S2, the ECU obtains a measurement of the amount of electrical energy stored in the vehicle battery.

At step S3, the ECU performs a test which consists in determining whether the measured amount of electrical energy stored in the vehicle battery (at step S2) is higher than or equal to a predetermined threshold level. For example, this threshold level can be set such that it corresponds to 60 W-h, for a battery of 60 A-h at 12 Volts (this corresponds to a capacity of 720 W-h). So, in this example, the threshold level would correspond to 8.3% of the capacity or possible electrical energy content of the battery.

If the answer to test S3 is "yes", the ECU executes step S4. At step S4, a biochemical conversion is performed. More precisely, at step S4 the ECU turns on the fluid transfer device 51 and the heater 70, to convey ammonia precursor solution inside the retaining unit 20 and to activate the enzyme, respectively. Advantageously, a check valve 60 is provided in the first pipe section 31 to prevent the ammonia precursor solution in the retaining unit 20 to return inside the tank 10. In such continuous mode, the ammonia precursor solution is fed continuously to the retaining unit 20 (by the fluid transfer device 51) and the reaction product is continuously removed from the retaining unit 20 (by the fluid transfer device 51 or by another fluid transfer device) and transported to the buffer reservoir 40. Advantageously, the decomposition occurs at an ammonia precursor flow rate and residence time suitable to achieve complete or partial conversion for instance, 80%, preferentially 95%, more preferentially 99% or ideally 100% of the ammonia precursor solution is converted into ammonia solution (i.e. reaction product). The residence time is the period of time a fluid is spending inside the retaining unit 20 at a given flow rate.

On the other hand, if the answer to test S3 is "no", the process return to step S2.

Optionally, the test at step S3 can further consist in verifying that there is a need to produce reaction product. To this aim, the ECU can perform the following steps:
- determining (or measuring) a quantity of reaction product stored in the buffer reservoir 40;
- determining whether the quantity of reaction product stored is higher than or equal to a predetermined required quantity.

For example, this required quantity can be set such that it corresponds to 20 to 60% of the total volume corresponding to the sum of the volume of ammonia precursor and the volume of reaction product, or ideally 30 to 40% of such volume.

Optionally, the test at step S3 can yet further consist in measuring the level of ammonia precursor solution stored in the tank 10 and verifying whether there is enough quantity of ammonia precursor solution for a conversion operation.

At step S5, the ECU obtains a measurement of the amount of electrical energy stored in the vehicle battery.

At step S6, the ECU performs a test which consists in determining whether the measured amount of electrical energy stored in the vehicle battery (at step S5) is higher than or equal to the predetermined threshold level.

If the answer to test S6 is "yes", the process return to step S4 so as to continue the biochemical conversion.

On the other hand, if the answer to test S6 is "no", the ECU turns off (at step S7) the fluid transfer device 51 and the heater 70. Thus, at step S7 the ECU deactivates the enzyme and stops the biochemical conversion. Then, the process can return to step S2.

In a particular embodiment, the thermal conditioning elements 80 can further be used to activate the enzyme to its optimal reaction temperature.

Figure 3 illustrates an exemplary embodiment of a flow chart of instructions depicting logical operational steps for activating and deactivating the biological catalyst of figure 1 in a batch mode. In this exemplary embodiment, a secondary fluid transfer device (not shown) is placed in the second pipe section 32 between the head of the tank filler pipe and the buffer reservoir 40. For example, the secondary fluid transfer device is a controllable valve. The controllable valve is arranged in the second pipe section 32 and is configured such that when it is closed, the solution present in the retaining unit 20 cannot flow in the second pipe section 32 towards the buffer reservoir 40, and when it is opened, the solution present in the retaining unit 20 is evacuated out of the retaining unit 20 and is guided towards the buffer reservoir 40.

Steps S10, S20 and S30 of figure 3 are similar to the above-described steps S1, S2 and S3 of figure 2, respectively, and their descriptions are not repeated hereafter.

If the answer to test S30 is "yes", the ECU executes step S40.

On the other hand, if the answer to test S30 is "no", the process return to step S20.

At step S40, a biochemical conversion is performed. More precisely, at step S40, the ECU turns on the fluid transfer device 51 and the heater 70, to convey ammonia precursor solution inside the retaining unit 20 and to activate the enzyme, respectively. The fluid transfer device 51 is controlled such that a predetermined quantity of ammonia precursor solution is moved inside the retaining unit 20. The fluid transfer device 51 is turned off once the predetermined quantity of ammonia precursor solution has been moved inside the retaining unit 20. Further, at step S40 the controllable valve is closed.

At step S50, the ECU monitors the progress of the conversion. More precisely, the ECU performs a test which consists in detecting an event indicative of end-of-conversion. To this aim, the ECU can perform the following steps:
- measuring (by means of a physical sensor) the electrical conductivity of the solution in the retaining unit 20;
- determining whether the measured electrical conductivity is higher than or equal to a predetermined target electrical conductivity.

If the answer to test S50 is "yes", the ECU turns off the heater 70 and opens the controllable valve (step S60). The solution present in the retaining unit 20 is evacuated (for example by gravity) out of the retaining unit 20 and is guided towards the buffer reservoir 40. Then, the ECU executes step S70 (described hereafter).

In another embodiment, step S60 can be performed at the same time as the refilling of new ammonia precursor in the batch loop as part of step 40. This is particularly advantageous since the fresh ammonia precursor (i.e. newly introduced in the retaining unit) will automatically push the effluents out of the retaining unit.

In another embodiment, it can be advantageous to take into account the thermal inertia of the system. This means that after the heater is off the solution is not immediately transferred to the buffer, as conversion is still running.

On the other hand, if the answer to test S50 is "no", the test S50 is repeated.

In the example described above, the control of the conversion time period is based on an electrical conductivity comparison.

In another example, the control of the conversion time period can be based on a time model or a time table, for instance the time necessary to obtain the required level of conversion can be tabulated depending upon the ageing of the enzymes, the number of conversion operation performed, the age of the enzymes, a temperature history during idle periods, etc.. It can further be based on data provided by a chemical/physical sensor during the reaction: for instance, the total conversion time period can be calculated as 3 times the time it took to increase the electrical conductivity by a factor of 10; so if the electrical conductivity has been multiplied by 10 in 15 minutes, the total duration of the conversion can be fixed at 45 minutes.

At step S70, after complete evacuation of the effluents present in the retaining unit 20, the ECU closes the controllable valve and obtains a measurement of the amount of electrical energy stored in the vehicle battery.

At step S80, the ECU performs a test which consists in determining whether the measured amount of electrical energy stored in the vehicle battery (at step S70) is higher than or equal to the predetermined threshold level.

If the answer to test S80 is "yes", the process return to step S50, so as to replenish the retaining unit 20 with ammonia precursor solution and start a new conversion operation.

On the other hand, if the answer to test S5 is "no", the process can return to step S10 (or S20).

Whilst the principles of the invention have been set out above in connection with specific embodiments, it is to be understood that this description is merely made by way of example and not as a limitation of the scope of protection which is determined by the appended claims.

## Claims

1. A method for activating/deactivating a biological catalyst used in a conversion system on board a vehicle, the vehicle comprising a source of energy adapted to activate the biological catalyst for converting a compound into reaction product, the conversion system being configured to supply reaction product to a consuming unit on board the vehicle, wherein the method comprises:
- detecting (S1) an event indicative of the filling/refilling of the conversion system with biological catalyst;
- determining (S2) an amount of energy available at the source of energy;
- starting at least one conversion operation comprising the steps of:
(i) verifying (S3) whether the amount of energy available is greater than or equal to an amount of energy needed for activating the biological catalyst so as to achieve a predetermined level of conversion of said compound;
(ii) if said verifying (i) is positive, activating (S4) the biological catalyst.
- terminating (S7) said at least one conversion operation.

2. The method as claimed in claim 1, wherein the step of terminating said at least one conversion operation comprises the steps of:
(iii) verifying (S6) whether the amount of energy available is lower than the amount of energy needed for activating the biological catalyst so as to achieve the predetermined level of conversion of said compound;
(iv) if said verifying (iii) is positive, deactivating the biological catalyst.

3. The method as claimed in any of the preceding claims, wherein the step of terminating said at least one conversion operation comprises the steps of:
(v) determining a current quantity of reaction product available in the conversion system;
(vi) verifying whether the current quantity of reaction product available is greater than or equal to a predetermined target quantity of reaction product;
(vii) if said verifying (vi) is positive, deactivating the biological catalyst.

4. The method as claimed in any of the preceding claims, wherein the step of terminating said at least one conversion operation comprises the steps of:
- starting a timer for a predetermined amount of time;
- upon expiry of said timer, deactivating the biological catalyst.

5. The method as claimed in any of the preceding claims, wherein the step of terminating said at least one conversion operation comprises the steps of:
- determining at least one parameter characteristic of the reaction product;
- detecting an event indicative of end-of-conversion based on said at least one parameter;
- deactivating the biological catalyst

6. The method as claimed in any of the preceding claims, the conversion system comprising a reactor, inside which the conversion of the compound into reaction product takes place, and a container for the storage of reaction product, wherein the method further comprises:
- after said terminating said at least one conversion operation, conveying reaction product from the reactor towards the container;
- replenishing the reactor with biological catalyst and/or compound.

7. The method as claimed in any of the preceding claims, further comprising:
- measuring at least one operating parameter of the conversion system;
and wherein the amount of energy needed for activating the biological catalyst is determined as a function of the measured operating parameter(s).

8. A vehicle system comprising:
a conversion system using a biological catalyst and being configured to supply reaction product to a consuming unit;
a source of energy adapted to activate the biological catalyst for converting a compound into reaction product;
an electronic controller configured to:
- detect an event indicative of the filling/refilling of the conversion system with biological catalyst;
- determine an amount of energy available at the source of energy;
- start at least one conversion operation and activate the biological catalyst, when the amount of energy available is greater than or equal to an amount of energy needed for activating the biological catalyst so as to achieve a predetermined level of conversion of said compound;
- terminate said at least one conversion operation.

9. The vehicle system of claim 8, wherein the electronic controller is further configured to perform the steps of the method of any one of claims 2 to 7.
